Europäisches Patentamt

European Patent Office

Office européen des brevets

(11) Veröffentlichungsnummer : **0 051 125**
**B1**

(12)     **EUROPÄISCHE PATENTSCHRIFT**

(45) Veröffentlichungstag der Patentschrift :
13.03.85

(21) Anmeldenummer : 81106819.6

(22) Anmeldetag : 01.09.81

(51) Int. Cl.⁴ : **F 02 B 37/12, F 02 B 37/00**

(54) **Abgasturbine eines Abgasturboladers für Brennkraftmaschinen.**

(30) Priorität : **04.11.80 DE 3041471**

(43) Veröffentlichungstag der Anmeldung :
**12.05.82 Patentblatt 82/19**

(45) Bekanntmachung des Hinweises auf die Patenterteilung : **13.03.85 Patentblatt 85/11**

(84) Benannte Vertragsstaaten :
**DE FR GB IT SE**

(56) Entgegenhaltungen :
**FR-A- 1 027 121**
**GB-A-   255 894**
**US-A- 2 412 365**
**US-A- 2 497 380**
**US-A- 3 233 403**
**Patent Abstracts of Japan, Band 3, Nr. 42, 12. April 1979, Seite 100M55**

(73) Patentinhaber : **Dr.Ing.h.c. F. Porsche Aktiengesellschaft**
**Porschestrasse 42**
**D-7000 Stuttgart 40 (DE)**

(72) Erfinder : **Striebich, Helmut, Dipl.-Ing.**
**Max-Beckmann-Strasse 25**
**D-7500 Karlsruhe 41 (DE)**

## Beschreibung

Die Erfindung bezieht sich auf eine Abgasturbine eines Abgasturboladers für Brennkraftmaschinen nach dem Oberbegriff des Anspruchs 1.

Bei Brennkraftmaschinen mit Abgasturboaufladung ergibt sich das Problem, den Abgasturbolader auf die unterschiedlichen Betriebsbedingungen der Brennkraftmaschine abzustimmen. Bei niedrigen Brennkraftmaschinen-Drehzahlen ist die Abgasmenge relativ gering, so daß bei einer entsprechenden Auslegung der Abgasturbine bei hohen Brennkraftmaschinen-Drehzahlen, die einen sehr viel größeren Abgasdurchsatz bewirken als niedrige Brennkraftmaschinen-Drehzahlen, die vom Verdichter geförderte Luftmenge übermäßig groß ist. Wenn umgekehrt die Abgasturbine einen größeren Abgasdurchsatz entsprechend ausgelegt wird, ist die vom Verdichter geförderte Luftmenge bei niedrigen Brennkraftmaschinen-Drehzahlen zu gering.

Aus GB-A 255 894 ist es bekannt, eine Abgasturbine eines Abgasturboladers, die von Abgasen radial nach außen gehend durchströmt wird, an ihrer Eingangs- oder Ausgangsseite mit einem zum Turbinenläufer koaxialen Ringkanal zu versehen, dessen Durchtrittsquerschnitt mit in Abhängigkeit von Betriebsparametern der Brennkraftmaschine verstellbaren Drosseln steuerbar ist. Durch diese Drosseln werden jedoch Wirbel erzeugt, die eine exakte Steuerung des Turboladers in Abhängigkeit von Betriebsparametern unmöglich machen und die oft der Anlaß für ein lästiges, sprunghaftes Einsetzen des Turboladers sind. Außerdem ist diese Drosselvorrichtung in Herstellung und Montage recht aufwendig.

Weiterhin ist aus US-A 3 233 403 eine Abgasturbine eines Abgasturboladers bekannt, die einen koaxial zum Turbinenläufer angeordneten Einströmkanal aufweist, der in einer zu ihr längsverschieblichen Schiebemuffe ausgebildet ist, wobei die Schiebemuffe und der Turbinenläufer den gleichen Außendurchmesser haben. Je näher die Schiebemuffe zum Turbinenläufer hin verschoben wird, um so stärker wird die Beaufschlagung des Turbinenläufers durch den Abgasstrom, da der zwischen der Schiebemuffe und dem Turbinenläufer liegende Ringspalt verkleinert wird, durch den ein Teil der Abgase strömt, ohne den Turbinenläufer zu beaufschlagen. Da eine Drosselung des durch den Turbinenläufer fließenden Abgasstromes mit einer solchen Vorrichtung nicht möglich ist, kann die Leistung der Abgasturbine nur geringfügig verändert werden.

Die Aufgabe der Erfindung besteht darin, eine Abgasturbine mit einer konstruktiv einfachen Drosselvorrichtung auszustatten, mit der die Impulsbeaufschlagung und Leistung der Abgasturbine verlustfrei in weiten Grenzen verändert werden kann.

Zur Lösung dieser Aufgabe sind die kennzeichnenden Merkmale des Anspruchs 1 vorgesehen. Weitere, die Erfindung ausgestaltende Merkmale beinhalten die Unteransprüche.

Wenn die den Einströmkanal enthaltende Schiebemuffe in Drosselstellung die Schaufeln des Turbinenläufers untergreift und dabei einen Ringkanal einengt, der von den Schaufeln des Turbinenläufers umgeben ist, wird eine wirksame Drosselung des Abgasstromes erreicht. Da die Innenwand der Schiebemuffe venturiförmig gestaltet ist, wird das Abgas an ihr von dem engsten Querschnitt aus mit kontinuierlicher Krümmung in radialer Richtung umgelenkt. Diese Drosselvorrichtung, die im Aufbau sehr einfach und kostengünstig herstellbar ist, begünstigt eine exakte und feinfühlige Regelung des Turboladers, so daß auch die Fahrbarkeit des mit einer solchen Turbolader-Brennkraftmaschine ausgerüsteten Kraftfahrzeuges verbessert wird.

In der Zeichnung ist die Erfindung anhand einer beispielsweisen Ausführungsform dargestellt.

Es zeigt

Figur 1 einen Abgasturbolader im Längsschnitt mit voll geöffnetem Durchtrittsquerschnitt,

Figur 2 einen Abgasturbolader im Längsschnitt mit teilweise geöffnetem Durchtrittsquerschnitt,

Figur 3 einen Abgasturbolader im Längsschnitt mit geschlossenem Durchtrittsquerschnitt und

Figur 4 die Regelung der Größe des Durchtrittsquerschnittes schematisch dargestellt.

In der Zeichnung ist mit 1 ein Abgasturbolader bezeichnet, der ein Verdichtergehäuse 2, ein Lagergehäuse 3, ein Turbinengehäuse 4, Lagerbüchsen 5, eine Läuferwelle 6, einen Verdichterläufer 7, einen Turbinenläufer 8, eine Saugleitung 9, eine Druckleitung 10 sowie einen Einströmkanal 11 und einen Ausströmkanal 12 für die Abgase umfaßt. Der Einströmkanal 11 ist in einer axial verschiebbaren Schiebemuffe 13 mit venturiförmiger Innenwand ausgebildet. In einer zweckmäßigen Ausführungsform der Erfindung ist die Schiebemuffe aus einem keramischen Werkstoff gefertigt. Deren Verstellung erfolgt durch einen in einer entsprechenden Ausnehmung 14 geführten Exzenterbolzen 15, der von einer Regeleinrichtung 16 beeinflußt wird. Die der Regeleinrichtung 16 zugeführten Betriebsparameter der Brennkraftmaschine sind der durch den Pfeil 17 symbolisierte Abgasgegendruck, der durch den Pfeil 18 symbolisierte Ladedruck-Istwert und der durch den Pfeil 19 symbolisierte Ladedruck-Sollwert. Der Ladedruck-Sollwert wird entsprechend der Fahrpedalstellung von einem in einen Saugbetriebsbereich 20 und einen Ladebetriebsbereich 21 unterteilten Fahrpedalbereich 22 und der Ladedruck-Istwert von der Druckleitung 10 abgenommen. Der mit 23 bezeichnete Pfeil symbolisiert die von der Regeleinrichtung 16 dem Exzenterbolzen entsprechend dem Ladedruck-Istwert, dem Ladedruck-Sollwert und dem Abgasgegendruck zugeführte Stellgröße zur Verstellung der Schiebemuffe 13.

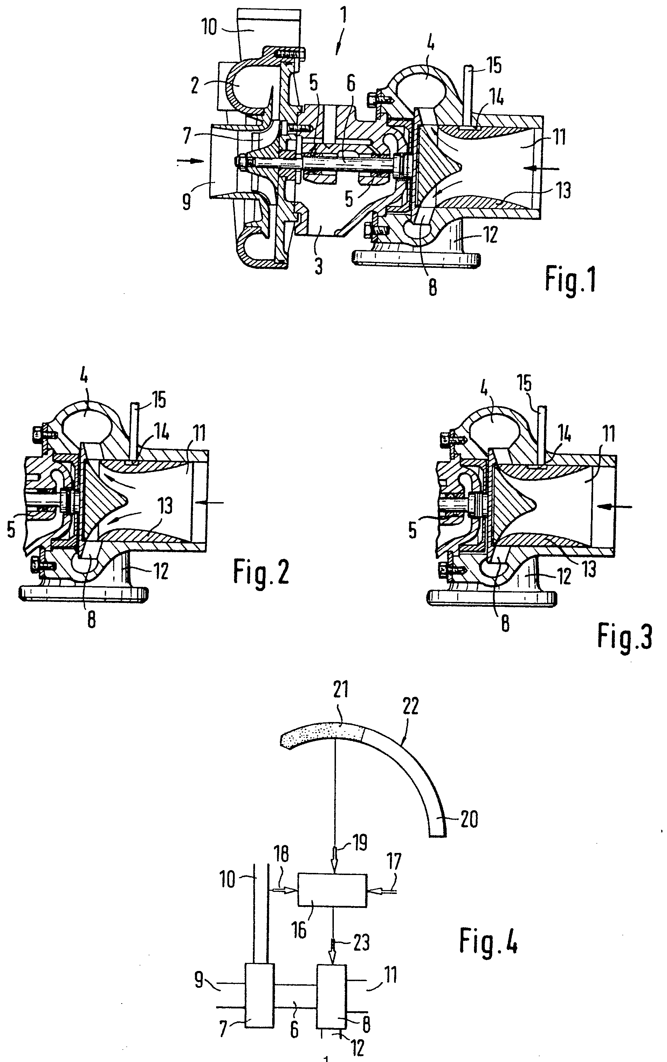

Die in der Fig. 3 gezeigte Darstellung des Abgasturboladers mit geschlossenem Durchtrittsquerschnitt ist eine rein theoretische Betrachtung einer Drosselstellung, die in keiner Betriebsphase der Brennkraftmaschine möglich ist und dient lediglich zum besseren Verständnis des funktionellen Zusammenhangs zwischen der Schiebemuffe 13 und dem Turbinenläufer 8.

Nach Inbetriebnahme der Brennkraftmaschine läuft diese zuerst im Saugbetrieb ; der Ladedruck-Sollwert ist Null und der Durchtrittsquerschnitt ganz geöffnet. Dadurch wird der Abgasgegendruck gering gehalten. Dieser Zustand wird entlang des Saugbetriebsbereiches 20 beibehalten.

Wird das Fahrpedal in den Ladebetriebsbereich 21 bewegt, so erhöht sich analog der Fahrpedalstellung der Ladedruck-Sollwert. Die Regeleinrichtung 17 bewirkt nun eine Veränderung des Turbineneintrittsquerschnittes durch die Verstellung der Schiebemuffe 13 und regelt den Abgasgegendruck so ein, daß zwischen der Turbinenleistung und aufgrund des gewünschten Ladedruck-Sollwertes erforderlichen Verdichterleistung gerade Leistungsgleichgewicht eintritt. Dadurch wird erreicht, daß mit minimalem Abgasgegendruck die erforderliche Verdichterleistung aufgebracht werden kann.

Daß der Exzenterbolzen die Schiebemuffe 13 erst beim Erreichen des Ladebetriebsbereiches 21 beeinflußt, kann z. B. auf einfachste Art elektrisch durch ein mit dem Fahrpedal mitlaufendes Potentiometer oder rein mechanisch gelöst werden.

## Ansprüche

1. Abgasturbine eines Abgasturboladers für Brennkraftmaschinen, insbesondere von Kraftfahrzeugen, wobei die Abgasturbine von den Abgasen radial nach außen gehend durchströmt wird und einen koaxial zum Turbinenläufer angeordneten Einströmkanal aufweist und der Durchfluß durch die Turbine durch Längsverschieben einer zu ihr koaxialen, den Einströmkanal (11) enthaltenden Schiebemuffe (13) in Abhängigkeit von Betriebsparametern der Brennkraftmaschine veränderbar ist, wobei der Einströmkanal (11) in einen Ringkanal ausmündet, dadurch gekennzeichnet, daß die Schiebemuffe (13) eine venturiförmige Innenwand aufweist, die in den Ringkanal ausmündet, daß der Ringkanal von den Schaufeln des Turbinenläufers (8) umgeben ist und die Schiebemuffe (13) bei Drosselstellung die Schaufeln untergreift, und daß in allen Stellungen der Schiebemuffe (13) die Strömung radial zu den Schaufeln hin umgelenkt wird.

2. Abgasturbine nach Anspruch 1, dadurch gekennzeichnet, daß die Schiebemuffe (13) aus einem keramischen Werkstoff besteht.

3. Abgasturbine nach Anspruch 1, dadurch gekennzeichnet, daß als steuernde Betriebsparameter der Ladedruck-Istwert (18), der durch die Fahrpedalstellung vorgegebene Ladedruck-Sollwert und der Abgasgegendruck (17) dienen, die einer Regeleinrichtung (16) zugeführt werden, die durch eine entsprechende Stellgröße (23) eine Verstellung der Schiebemuffe (13) bewirkt.

4. Abgasturbine nach Anspruch 3, dadurch gekennzeichnet, daß die Stellgröße (23) einen Exzenterbolzen (15) beeinflußt, der mit einer entsprechenden Ausnehmung (14) der Schiebemuffe (13) zusammenwirkt.

## Claims

1. An exhaust gas turbine of an exhaust gas supercharger for internal combustion engines, in particular of motor vehicles, the exhaust gases flowing radially through the exhaust gas turbine towards the outside and the exhaust gas turbine having an inflow duct disposed coaxially with the turbine rotor and the throughflow through the turbine being variable by longitudinal displacement of a sliding sleeve (13) containing the inflow duct (11) as a function of operating parameters of the internal combustion engine, and the inflow duct (11) opening into an annular duct, characterized in that the sliding sleeve (13) has a Venturi-shaped inner wall which opens into the annular duct, the annular duct is surrounded by the blades of the turbine rotor (8) and the sliding sleeve (13) engages under the blades in the throttling position, and the flow is deflected radially towards the blades in all positions of the sliding sleeve (13).

2. An exhaust gas turbine according to Claim 1, characterized in that the sliding sleeve (13) consists of a ceramic material.

3. An exhaust gas turbine according to Claim 1, characterized in that the controlling operating parameters are the boost pressure actual value (18), the boost pressure nominal value predetermined by the accelerator pedal position and the exhaust gas counter pressure (17), which are supplied to a control device (16) which causes a displacement of the sliding sleeve (13) by an appropriate regulated quantity (23).

4. An exhaust gas turbine according to Claim 3, characterized in that the regulated quantity (23) is affected by an eccentric pin (15) which cooperates with a corresponding recess (14) in the sliding sleeve (13).

## Revendications

1. Turbine à gaz d'échappement pour compresseur à gaz d'échappement pour moteurs à combustion interne, notamment de véhicules automobiles, la turbine à gaz d'échappement étant parcourue par les gaz d'échappement radialement vers l'extérieur et comportant un canal d'entrée disposé coaxialement par rapport au rotor de la turbine et le débit à travers la turbine pouvant être modifié par déplacement longitudinal d'un manchon coulissant (13) contenant le canal d'entrée (11), coaxial par rapport à elle, en fonction de paramètres de fonctionnement du moteur à combustion interne, le canal d'entrée (11) débouchant dans un canal annulaire, caractérisée en ce que le manchon coulissant (13) comporte une paroi intérieure en forme de venturi qui débouche dans le canal annulaire, en ce que le canal annulaire est entouré par les ailettes du rotor (8) de la turbine et le manchon coulissant (13) se place au-dessous des ailettes en position d'étranglement, et en ce que, dans toutes les positions du manchon coulissant (13), l'écoulement est dévié radialement en direction des ailettes.

2. Turbine selon la revendication 1, caractérisée en ce que le manchon coulissant (13) est constitué par une matière céramique.

3. Turbine selon la revendication 1, caractérisée en ce que les paramètres de fonctionnement de commande utilisés sont la valeur instantanée (18) de la pression d'admission, la valeur prescrite de la pression d'admission déterminée par la position de la pédale d'accélérateur et la contre-pression (17) des gaz d'échappement, qui sont transmis à un dispositif de réglage (16) qui produit un déplacement du manchon coulissant (13) par une grandeur de réglage (23) correspondante.

4. Turbine selon la revendication 3, caractérisée en ce que la grandeur de réglage (23) agit sur une tige à excentrique (15) qui coopère avec un évidement (14) correspondant du manchon coulissant (13).

**0 051 125**

Fig.1

Fig.2

Fig.3

Fig.4